# EUROPÄISCHE PATENTSCHRIFT

(11) **EP 2 171 816 B1**
(45) Veröffentlichungstag und Bekanntmachung des Hinweises auf die Patenterteilung: **18.06.2014**
(21) Anmeldenummer: 08784976.6
(22) Anmeldetag: 23.07.2008
(51) Int. Cl.: H02B 1/32

(54) **HALTEINRICHTUNG FÜR EINEN QUERTRÄGER IN EINEM ELEKTRISCHEN SCHALTSCHRANK UND SCHALTSCHRANK**
HOLDING DEVICE FOR A LATERAL MOUNT IN AN ELECTRICAL SWITCHGEAR CABINET, AND A SWITCHGEAR CABINET
DISPOSITIF DE MAINTIEN D'UNE TRAVERSE DANS UNE ARMOIRE DE DISTRIBUTION ÉLECTRIQUE ET ARMOIRE DE DISTRIBUTION

(30) Priorität: 24.07.2007 DE 102007034408
(43) Veröffentlichungstag der Anmeldung: 07.04.2010
(73) Patentinhaber: ABB AG, 68309 Mannheim (DE)
(72) Erfinder: ROTH, Michael, 77880 Sasbach (DE)
(86) Internationale Anmeldenummer: PCT/EP2008/006017
(87) Internationale Veröffentlichungsnummer: WO 2009/012983

(56) Entgegenhaltungen:
- EP-A- 0 760 546
- EP-A- 1 416 600
- DE-U1- 20 214 838

## Beschreibung

Die Erfindung betrifft eine an einem Trägerprofil eines Schaltschrankes anbringbare Halteeinrichtung für einen Querträger, nach dem Oberbegriff des Anspruches 1 und einen Schaltschrank nach dem Oberbegriff des Anspruches 11.

Zum Aufbau eines elektrischen Schaltschrankes werden Trägerprofile aus Stahl benutzt, die zu einem Gerüst zusammengesetzt werden, das an den vier vertikalen Ecken senkrecht verlaufende Trägerprofile aufweist, die mit horizontalen Trägerprofilen an den Enden der vertikalen Trägerprofile verbunden sind. An dem Gerüst werden eine Boden- und Deckwand sowie Seitenwände und eine Rückwand angesetzt. Innerhalb des Schaltschrankes sind Querträger angeordnet, die zum Beispiel als Hutprofiltragschienen oder Montageplatten ausgebildet sind und auf denen elektrische Installationsgeräte befestigt werden können.

Derartige elektrische Installationsgeräte besitzen oft unterschiedliche Höhen, so dass der Querträger oder die Querträger, auf denen die Installationsgeräte befestigt werden sollen, in unterschiedlicher Höhe oder unterschiedlicher Entfernung von dem betreffenden Trägerprofil anzuordnen sind. Da die einzelnen Trägerprofile meist vorbestimmte Öffnungen zur Befestigung eines Querträgers aufweisen, ist, wenn überhaupt, lediglich eine stufige Verstellung des Querträgers zur Aufnahme der Installationsgeräte möglich.

Das Dokument EP 1 416 600 offenbart ein Gerät gemäss dem Oberbegriff des Anspruchs 1.

Aufgabe der Erfindung ist es, eine Halteeinrichtung der eingangs genannten Art zu schaffen, bei der der Querträger zur Aufnahme beispielsweise von elektrischen Installationsgeräten stufenlos verstellbar ist.

Diese Aufgabe wird erfindungsgemäß durch die Merkmale des Anspruches 1 gelöst.

Erfingdungsgemäß ist damit eine an einem Trägerprofil anbringbare, senkrecht zum Trägerprofil verstellbare Halteeinrichtung für einen Querträger in einem elektrischen Installationsschaltschrank vorgesehen, die einen am Trägerprofil befestigbaren Halter und einen am Halter verschiebbaren und an beliebiger Stelle festlegbaren Bügel aufweist, der wenigstens zwei senkrecht zueinander verlaufende Bügelschenkel aufweist, wobei ein erster Bügelschenkel am Halter befestigbar und am zweiten Bügelschenkel der Querträger fixierbar ist.

Der Halter wird an einem Trägerprofil befestigt, welches beispielsweise ein senkrecht verlaufendes Profilelement oder Rahmenelement sein kann, wobei der Querträger, das heißt der Träger für die elektrischen Installationsgeräte, mittels des Bügels an unterschiedlichen Stellen am Halter festgelegt werden kann.

Gemäß der Erfindung ist der Halter mit einem Vorsprung am Trägerprofil befestigbar und der Bügel ist dann senkrecht zum Vorsprung am Halter und senkrecht zum Trägerprofil fixierbar.

Gemäss der Erfindung der Halter im Wesentlichen eine L-Form besitzen, deren einer Schenkel den Vorsprung bildet und an deren anderem Schenkel der erste Bügelschenkel fixierbar ist.

Der andere Schenkel kann dabei eine Aufnahmeöffnung zur formschlüssigen Halterung und Führung des ersten Bügelschenkels aufweisen, wobei die Aufnahmeöffnung eine Schwalbenschwanzform aufweisen oder als geschlossener Schlitz ausgebildet sein kann.

Der erste Bügelschenkel wird dabei in eine Aufnahmeöffnung eingesteckt und mittels eines durch den Vorsprung am Halter hindurch geführten Fixierelementes fixiert.

Gemäss der Erfindung das Fixierelement eine Feststellschraube sein, die schräg zur Längserstreckung des ersten Bügelschenkels und durch den Vorsprung hindurch in den Halter einschraubbar ist und die mit ihrem freien Ende in einen Längsschlitz am ersten Bügelschenkel des Haltebügels eingreift. Zu diesem Zweck ist das Fixierelement, hier die Feststellschraube, mit einer in dem Längsschlitz teilweise eingreifenden Spitze versehen. Die Feststellschraube ist bevorzugt eine Blechschraube, die mit ihrem Gewinde in den Schlitz des Bügelschenkels einschneidet.

Mit der erfindungsgemäßen Ausbildung können Querträger in unterschiedlicher Höhe stufenlos eingebaut werden, wobei alle Befestigungsschrauben von der Frontseite aus betätigbar sind.

Die Erfindung bezieht sich darüber hinaus auch auf einen Schaltschrank mit wenigstens einer erfindungsgemäßen Halteeinrichtung.

Anhand der Zeichnung, in der ein Ausführungsbeispiel der Erfindung dargestellt ist, sollen die Erfindung sowie weitere vorteilhafte Ausgestaltungen und Verbesserungen und weitere Vorteile der Erfindung näher erläutert und beschrieben werden.

Es zeigen:
- Figuren 1 und 2: je eine erfindungsgemäße Halteeinrichtung, die an einem Trägerprofil angebracht ist, wobei die Trägerprofile der Figuren 1 und 2 unterschiedlich sind,
- Fig. 3: eine Schnittansicht senkrecht zum Trägerprofil der Fig. 2 in der Längsmittelebene der Halteeinrichtung und
- Fig. 4: eine Schnittansicht ähnlich der Fig. 3 mit einer Variante einer Befestigungsschraube für die Halteeinrichtung.

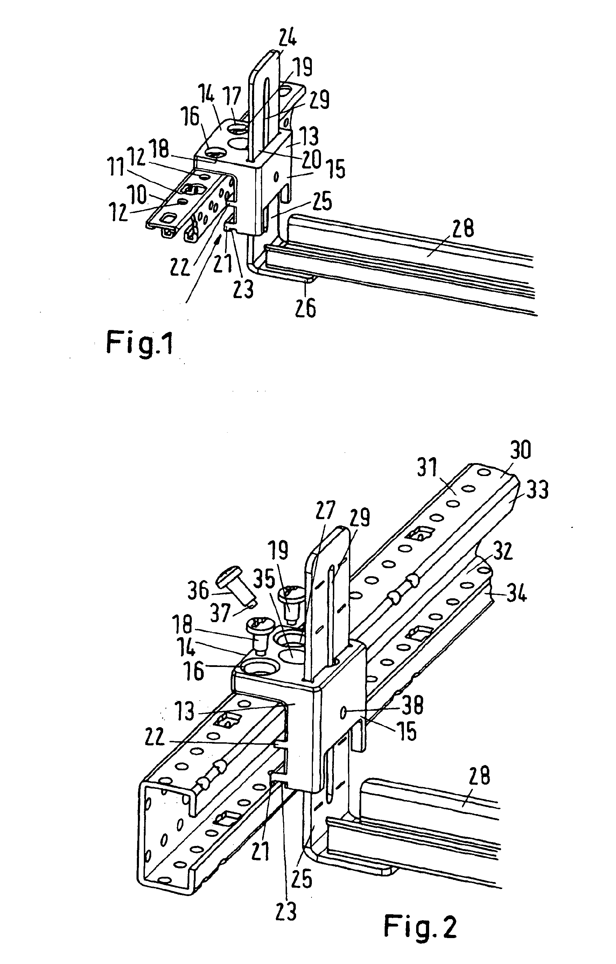

Ein elektrischer Schaltschrank umfasst unter anderem vertikale Trägerprofile, von denen ein Trägerprofil 10 in Fig. 1 (horizontal liegend) dargestellt ist. Die anderen Trägerprofile, die ein Rahmengerüst des Schaltschrankes bilden, sind nicht gezeichnet. Sie verlaufen alle in vertikaler Richtung, was so in den Figuren 1 und 2 nicht gezeichnet ist. Das Trägerprofil 10 der Fig. 1 ist c-förmig ausgebildet, wobei die freien Enden der Schenkel aufeinander zu abgewinkelt sind.

An dem flachen, mit rasterförmig angeordneten Löchern 12 versehenen, sichtbaren Auflageschenkel 11 des Trägerprofils 10 ist ein Halter 13 befestigt, der im Wesentlichen eine L-Form mit einem ersten Schenkel 14, der als Vorsprung dient und im folgenden auch als solcher bezeichnet ist, und einem zweiten Schenkel 15 aufweist. Der erste Schenkel 14, das heißt der Vorsprung 14, besitzt senkrecht dazu verlaufende Durchgangslöcher 16 und 17, durch die hindurch Befestigungsschrauben 18 und 19 gesteckt und in die entsprechenden Löcher 12 eingeschraubt werden können. Der zweite Schenkel 15 ist von einem Schlitz 20 durchsetzt, der senkrecht zum Vorsprung 14 und in Längsrichtung des zweiten Schenkels 15 verläuft. An der Innenseite des zweiten Schenkels 15 sind Leisten 21 und 22 vorgesehen, die in die gleiche Richtung wie der Vorsprung 14 vorspringen. Auf der dem Vorsprung 14 entgegengesetzt liegenden Seite, die parallel zum Vorsprung 14 und senkrecht zum zweiten Schenkel 15 verläuft, besitzt die Leiste 21 eine Rille 23, die parallel zum freien Ende der Leiste 21 verläuft. Zu den Leisten 21 und 22 soll anhand der Fig. 2 Näheres erläutert werden.

Der Schlitz 20 dient zur Aufnahme eines ersten Bügelschenkels 24 eines L-förmigen Bügels 25, wobei der erste Bügelschenkel 24 in den Schlitz 20 vom freien Ende des zweiten Schenkels 15 aus in Richtung zum Vorsprung 14 hin eingefügt wird, so dass der zweite Bügelschenkel 26 vom Trägerprofil weg weist und in entgegengesetzte Richtung zum Vorsprung 14 vorspringt. Auf den zweiten Bügelschenkel 26 können, wie in der Fig.1 und 2 gezeigt, zum Beispiel Hutprofiltragschienen als Querträger 28 festgeschraubt werden.

Der erste Bügelschenkel 24 weist einen Längsschlitz 29 auf.

Im fertig montierten Schaltschrank weist der Auflageschenkel nach vorne zur Frontseite des Schaltschrankes.

Es sei nun Bezug genommen auf die Fig. 2.

Das dort gezeichnete Trägerprofil 30 ist als C-förmiges Profil ausgebildet, das zwei parallel zueinander verlaufende Schenkel 31, 32 aufweist, an deren freien Enden aufeinander zu weisende, die C-Form erzeugende Profilleisten 33, 34 angeformt sind.

Die beiden Leisten 21 und 22 des Halters 13 greifen in den Zwischenraum zwischen den aufeinander zu weisenden Kanten der Schenkel 33, 34 ein, wobei die freie Kante des Schenkels 34 in die Rille 23 eingreift und hierdurch den Halter 13 am Trägerprofil 30 festlegt. Die Leiste 22 greift ebenfalls in den Zwischenraum zwischen den freien Kanten der Schenkel 33 und 34 ein und dient dabei zum Verdrehschutz um eine Achse, die parallel zur Längserstreckung des Querträgers 28 verläuft.

In dem Vorsprung 14 des Halters 13 der Figuren 1 und 2 ist eine Aufnahmeöffnung 35 vorgesehen, die unter einem Winkel von etwa 45° zu der freien Fläche des Vorsprunges 14 hin zum zweiten Schenkel 15 verläuft, in welche eine als Blechschraube ausgebildete Befestigungsschraube 36 eingeschraubt werden kann, welche Befestigungsschraube eine Spitze 37 aufweist, die in den Längsschlitz 29 zur Fixierung des Bügels 25 einschneidet. Dabei ist die Befestigungsschraube 36 auf den Längsschlitz 29 abgestimmt. Dies ist insbesondere dann einfach, wenn der Bügel 25 aus Kunststoff oder Aluminiumblech oder im Druckgussverfahren aus Aluminium hergestellt ist.

Zu dem Trägerprofil 10 oder 30 gehört ein zweites parallel dazu verlaufendes Trägerprofil, an dem das andere Ende des Querträgers 28 mittels der gleichen Halteeinrichtung befestigt werden kann.

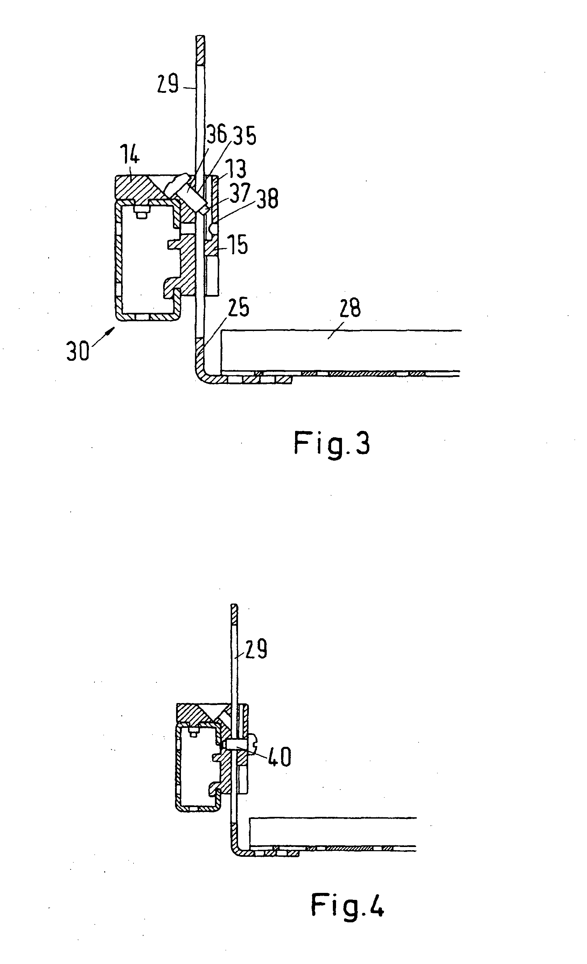

Die Fig. 3 zeigt eine Schnittansicht senkrecht zu dem Trägerprofil 30. Es zeigt die Aufnahmeöffnung 35, die unter dem Winkel von 45° zu der oberen Fläche des Vorsprunges oder Schenkels 14 verläuft, in welche die Befestigungsschraube 36 eingesteckt ist. Die Spitze der Befestigungsschraube 36, die als Blechschraube ausgebildet ist, greift mit einem Teil der Schaube 36 in den Längsschlitz 29 ein, so dass der Bügel 25 durch die Schraube formschlüssig aufgrund des Gewindes von der Befestigungsschraube 36 festgehalten ist.

Die Fig. 4 zeigt eine Schnittansicht ähnlich der der Fig. 3. Anstelle der Befestigungsschraube 36 ist eine Befestigungsschraube 40 vorgesehen, welche der Befestigungsschraube 36 gleicht. Diese Befestigungsschraube 40 ist in eine Durchgangsöffnung 38 im zweiten Schenkel 15 eingesteckt und in den Längsschlitz 29 des Haltebügels eingeschraubt. Die Schraube 40 ist ebenfalls eine Blechschraube, so dass sie in gleicher Weise in den Längsschlitz 29 eingeschraubt wird wie bei der Ausführung gemäß Fig. 3.

Mit der erfindungsgemäßen Ausgestaltung können Querträger in unterschiedlicher Höhe bezogen auf das Trägerprofil eingestellt werden. Die Trägerprofile 10 beziehungsweise 30 sind, wie oben schon erwähnt, senkrecht verlaufende Trägerprofile in einem Schaltschrank, wobei an diesen senkrecht verlaufenden Trägerprofilen die Querträger 28, das heiß die Hutprofiltragschienen, in unterschiedlichen Höhen oder Tiefen gemessen von einer vertikal verlaufenden Frontfläche eingestellt werden können, abhängig von der Höhe eines in den Schaltschrank einzubauenden Installationsgerätes.

Nachzutragen ist, dass der Halter mit den Befestigungsschrauben 18, 19 am Trägerprofil befestigt ist; in Fig. 2 sind diese Befestigungsschrauben vor dem Einsetzen in die Durchgangslöcher 16, 17 gezeichnet.

Im fertigen Schaltschrank ist die Verstellbarkeit des Querträgers eine horizontale Verstellbarkeit.

### Bezugszeichenliste

- 10: Trägerprofil
- 11: Auflageschenkel
- 12: Lochraster
- 13: Halter
- 14: Erster SchenkelNorsprung
- 15: Zweiter Schenkel/Vorsprung
- 16: Durchgangsloch
- 17: Durchgangsloch
- 18: Befestigungsschraube
- 19: Befestigungsschraube
- 20: Schlitz
- 21: Leiste
- 22: Leiste
- 23: Rille
- 24: Erster Bügelschenkel
- 25: Bügel
- 26: Zweiter Bügelschenkel
- 28: Querträger
- 29: Längsschlitz
- 30: Trägerprofil
- 31: Schenkel
- 32: Schenkel
- 33: Kante der Schenkel 31, 32
- 34: Kante der Schenkel 31, 32
- 35: Aufnahmeöffnung
- 36: Befestigungsschraube
- 37: Spitze
- 38: Durchgangsloch

## Patentansprüche

1. Halteeinrichtung für einen Querträger (28) in einem elektrischen Installations-Schaltschrank, welche an einem Trägerprofil (10, 30) senkrecht zum Trägerprofil (10, 30) verstellbar anbringbar ist, mit einem am Trägerprofil (10, 30) befestigbaren Halter (13) und mit einem im Halter (13) verschiebbar festlegbaren Bügel (25), welcher Bügel (25) wenigstens zwei senkrecht zueinander verlaufende Bügelschenkel (24, 26) aufweist, wobei ein erster Bügelschenkel (24) am Halter (13) stufenlos veränderbar befestigbar ist und wobei am zweiten Bügelschenkel (26) der Querträger (28) befestigbar ist, **dadurch gekennzeichnet, dass** der Halter (13) mit einem Vorsprung (14) am Trägerprofil (10, 30) befestigbar und der Bügel (25) senkrecht zum Vorsprung (14) am Halter (13) fixierbar ist, und der Halter (13) im Wesentlichen eine L-Form besitzt, deren erster Schenkel (14) den Vorsprung (14) bildet, und an deren zweiten Schenkel (15) der erste Bügelschenkel (24) fixierbar ist, und der erste Bügelschenkel (24) einen Längsschlitz (29) aufweist, in den ein durch den Vorsprung (14) am Halter (13) gestecktes Fixierelement (36) fixierbar ist, wobei das Fixierelement (36) eine Feststellschraube ist, die schräg zum Verlauf des ersten Bügelschenkels (24) und schräg zum Vorsprung (14) durch den Vorsprung (14) hindurch in diesen einschraubbar ist und mit ihrem freien Gewindeende in den Längsschlitz (29) zur Fixierung des Bügels (25) eingreift.

2. Halteeinrichtung nach Anspruch 1, **dadurch gekennzeichnet, dass** der zweite Schenkel (15) des Halters (13) eine Aufnahmeöffnung (20) zur Führung und formschlüssigen Halterung des ersten Bügelschenkels (24) aufweist.

3. Halteeinrichtung nach Anspruch 2, **dadurch gekennzeichnet, dass** die Aufnahmeöffnung (20) eine Schwalbenschwanzform aufweist.

4. Halteeinrichtung nach Anspruch 2 oder 3, **dadurch gekennzeichnet, dass** die Aufnahmeöffnung (20) als ein geschlossener Schlitz ausgebildet ist.

5. Halteeinrichtung nach einem der vorherigen Ansprüche, **dadurch gekennzeichnet, dass** die Feststellschraube (36) eine Blechschraube ist.

6. Halteeinrichtung nach einem der vorherigen Ansprüche, **dadurch gekennzeichnet, dass** die Befestigungs- und Feststellschrauben alle von der vorderen Frontseite bedienbar sind.

7. Elektrischer Schaltschrank, insbesondere Schaltschrank für eine Installationsverteilung, mit vorzugsweise senkrecht und parallel zueinander verlaufenden Trägerprofilen (10, 30), mit wenigstens einer Halteeinrichtung gemäß den Merkmalen eines der Ansprüche 1 bis 6, **dadurch gekennzeichnet, dass** die Halteeinrichtung an senkrecht verlaufenden Trägerprofilen anbringbar beziehungsweise angebracht ist.

## Claims

1. Holding device for a crossmember (28) in an electrical service switchgear cabinet, which holding device can be fitted to a carrier profile (10, 30) such that it can be adjusted perpendicular to the carrier profile (10, 30), having a holder (13) which can be fastened to the carrier profile (10, 30) and having a bracket (25) which can be secured such that it can be displaced in the holder (13) and which bracket (25) has at least two bracket limbs (24, 26) which run perpendicular to one another, wherein a first bracket limb (24) can be fastened to the holder (13) such that it can be continuously varied, and wherein the crossmember (28) can be fastened to the second bracket limb (26), **characterized in that** the holder (13) can be fastened to the carrier profile (10, 30) by way of a projection (14), and the bracket (25) can be fixed to the holder (13) perpendicular to the projection (14), and the holder (13) substantially has an L-shape, the first limb (14) of the said L-shape forming the projection (14) and it being possible for the first bracket limb (24) to be fixed to the second limb (15) of said L-shape, and the first bracket limb (24) having a longitudinal slot (29) into which a fixing element (36) which is inserted through the projection (14) on the holder (13) can be fixed, wherein the fixing element (36) is a locking screw which can be screwed, obliquely to the profile of the first bracket limb (24) and obliquely to the projection (14), through the projection (14), into the said projection and engages, by way of its free thread end, in the longitudinal slot (29) in order to fix the bracket (25).

2. Holding device according to Claim 1, **characterized in that** the second limb (15) of the holder (13) has a receiving opening (20) for guiding and holding the first bracket limb (24) in an interlocking manner.

3. Holding device according to Claim 2, **characterized in that** the receiving opening (20) has a dovetail shape.

4. Holding device according to Claim 2 or 3, **characterized in that** the receiving opening (20) is in the form of a closed slot.

5. Holding device according to one of the preceding claims, **characterized in that** the locking screw (36) is a self-tapping screw.

6. Holding device according to one of the preceding claims, **characterized in that** the fastening and locking screws can all be operated from the front front face.

7. Electrical switchgear cabinet, in particular switchgear cabinet for a service distribution board, having carrier profiles (10, 30) which preferably run in a vertical direction and parallel to one another, having at least one holding device according to the features of one of Claims 1 to 6, **characterized in that** the holding device can be fitted or is fitted to carrier profiles which run in a vertical direction.

## Revendications

1. Dispositif de maintien pour une traverse (28) dans une armoire de distribution d'installation électrique, lequel dispositif de maintien peut être monté de manière déplaçable sur un profilé de support (10, 30) perpendiculairement au profilé de support (10, 30), comprenant un élément de maintien (13) pouvant être fixé au profilé de support (10, 30) et comprenant un étrier (25) pouvant être fixé de manière coulissante dans l'élément de maintien (13), lequel étrier (25) comprend au moins deux branches d'étrier (24, 26) s'étendant perpendiculairement l'une à l'autre, une première branche d'étrier (24) pouvant être fixée à l'élément de maintien (13) de manière variable en continu, et la traverse (28) pouvant être fixée à la deuxième branche d'étrier (26), **caractérisé en ce que** l'élément de maintien (13) peut être fixé au profilé de support (10, 30) à l'aide d'une saillie (14) et l'étrier (25) peut être fixé à l'élément de maintien (13) perpendiculairement à la saillie (14), et l'élément de maintien (13) présente essentiellement une forme en L dont la première branche (14) forme la saillie (14) et à la deuxième branche duquel (15) peut être fixée la première branche d'étrier (24), la première branche d'étrier (24) comprend une fente longitudinale (29) dans laquelle peut être fixé un élément de fixation (36) inséré à travers la saillie (14) sur l'élément de maintien (13), l'élément de fixation (36) étant une vis de blocage qui peut être vissée dans la saillie (14), à travers celle-ci, de manière oblique par rapport à l'étendue de la première branche d'étrier (24) et de manière oblique par rapport à la saillie (14), et qui vient en prise par son extrémité filetée libre dans la fente longitudinale (29) en vue de la fixation de l'étrier (25).

2. Dispositif de maintien selon la revendication 1, **caractérisé en ce que** la deuxième branche (15) de l'élément de maintien (13) comprend une ouverture de réception (20) pour le guidage et le maintien par engagement par complémentarité de formes de la première branche d'étrier (24).

3. Dispositif de maintien selon la revendication 2, **caractérisé en ce que** l'ouverture de réception (20) présente une forme en queue d'aronde.

4. Dispositif de maintien selon la revendication 2 ou 3, **caractérisé en ce que** l'ouverture de réception (20) est réalisée sous forme de fente fermée.

5. Dispositif de maintien selon l'une quelconque des revendications précédentes, **caractérisé en ce que** la vis de blocage (36) est une vis à tôle.

6. Dispositif de maintien selon l'une quelconque des revendications précédentes, **caractérisé en ce que** les vis de fixation et de blocage peuvent toutes être manipulées à partir du côté frontal avant.

7. Armoire de distribution électrique, en particulier armoire de distribution pour une distribution d'installation, comprenant des profilés de support (10, 30) s'étendant de préférence verticalement et parallèlement les uns aux autres, comprenant au moins un dispositif de maintien selon les caractéristiques de l'une des revendications 1 à 6, **caractérisée en ce que** le dispositif de maintien peut être monté ou est monté sur des profilés de support s'étendant verticalement.
